# EUROPÄISCHE PATENTANMELDUNG

(11) **EP 1 845 041 A1**
(43) Veröffentlichungstag der Anmeldung: **17.10.2007**
(21) Anmeldenummer: 06023244.4
(22) Anmeldetag: 08.11.2006
(51) Int. Cl.: B65G 49/06, B60P 3/00, B65D 85/48

(54) **Klappbares Glastransportgestell**

(30) Priorität: 11.04.2006 DE 102006017047
(71) Anmelder: USD Formteiltechnik GmbH, 58540 Meinerzhagen (DE)
(72) Erfinder: Dierks, Karl-Josef, 58300 Wetter/Ruhr (DE)
(74) Vertreter: Tomerius, Isabel

(57) **Zusammenfassung**

Die Erfindung betrifft ein Glastransportgestell zum Transport von Glasscheiben, insbesondere auf LKW-Ladeflächen, mit einem Tragegestell, mit mindestens einem Trägerboden, der eine Trägerfläche für die Glasscheiben bildet und der an seinem dem Tragegestell zugewandten, inneren Randbereich an diesem gelagert ist, und mit mindestens einer Anlageschulter, die eine Anlagefläche für die Glasscheiben bildet und die an ihrem Fußbereich an dem Trägerboden und an ihrem Kopfbereich an dem Tragegestell gelagert ist. Um ein kompaktes und kostengünstiges Glastransportgestell zur Verfügung zu stellen, ist der mindestens eine Trägerboden an einer ersten, in Längsrichtung des Glastransportgestells verlaufenden, horizontalen Schwenkachse schwenkbar am Tragegestell gelagert und von einer aufgeklappten Position in eine zugeklappte Position in Richtung auf Tragegestell hochklappbar. Ferner ist die mindestens eine Anlageschulter an einer zweiten, in Längsrichtung des Glastransportgestells verlaufenden, horizontalen Schwenkachse schwenkbar an dem mindestens einen Trägerboden gelagert, wobei die zweite Schwenkachse in der aufgeklappten Position seitlich neben der ersten Schwenkachse angeordnet ist und in der hochgeklappten Position die zweite Schwenkachse relativ gegenüber der ersten Schwenkachse nach oben verschoben ist. Schließlich ist die mindestens eine Anlageschulter höhenverschieblich am Tragegestell gelagert.

## Beschreibung

Die Erfindung betrifft ein Glastransportgestell zum Transport von Glasscheiben, insbesondere auf LKW-Ladeflächen, mit einem Tragegestell, mit mindestens einem Trägerboden, der eine Trägerfläche für die Gasscheiben bildet und der an seinem dem Tragegestell zugewandten, inneren Randbereich an diesem gelagert ist, und mit mindestens einer Anlageschulter, die eine Anlagefläche für die Glasscheiben bildet und die an ihrem Fußbereich an dem Trägerboden und an ihrem Kopfbereich an dem Tragegestell gelagert ist.

Auf Glastransportgestellen werden Glasscheiben, Isoliergläser, etc. transportiert. Insbesondere werden Glasscheiben mittels Glastransportgestellen vom Hersteller zur Baustelle, an der die Glasscheiben eingesetzt werden sollen, oder zum Fensterbauer transportiert. Zum Transport werden die Glastransportgestelle im Allgemeinen mit Glasscheiben bestückt und dann auf LKWs aufgeladen.

Die bekannten Glastransportgestelle weisen üblicherweise ein Tragegestell auf, an dem mindestens ein Trägerboden angebracht ist, auf den Glasscheiben aufgestellt werden können. Typischerweise ist er im Fußbereich des Tragegestells angeordnet und steht seitlich von diesem vor. Ferner umfassen die bekannten Glastransportgestelle wenigstens eine Anlageschulter, die eine Anlagefläche für die Glasscheiben bildet. Die Glasscheiben werden also mit einer Kante auf die Trägerfläche des Tragegestells aufgestellt und mit ihrer Seite gegen die Anlageschulter gelehnt. Die Anlageschulter ist normalerweise an ihrem Fußbereich am Trägerboden und an ihrem Kopfbereich am Tragegestell gelagert.

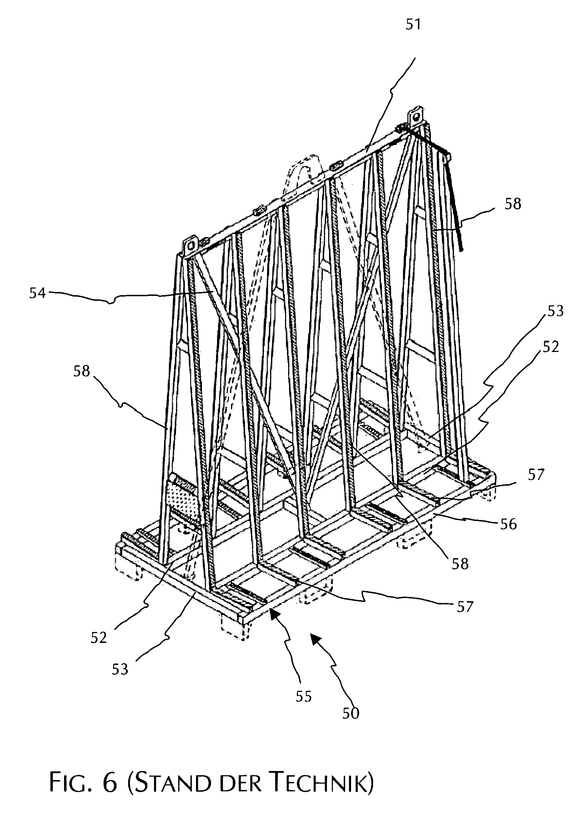

Das Tragegestell, der Trägerboden sowie die Anlageschulter sind fest miteinander, beispielsweise mittels Verschweißung, verbunden. Typischerweise haben die Glastransportgestelle einen symmetrischen, A-förmigen Aufbau, bei dem die beiden Anlageflächen in einer Querschnittsbetrachtung jeweils einen A-Schenkel bilden und dementsprechend voneinander abgewandt sind. Ein derartiges, aus dem Stand der Technik bekanntes Glastransportgestell ist beispielsweise in Fig. 6 dargestellt. Das dort dargestellte Glastransportgestell 50 umfasst ein Tragegestell, das aus einem oberen Längsholm 51, zwei unteren Längsholmen 52, drei unteren Querholmen 53 und Querverstrebungen 54 besteht. An den unteren Längsholmen 52 sind nach außen, zur Seite vorstehend, Trägerböden 55 gelagert, die jeweils aus einem weiteren Längsholm 56, der im Wesentlichen parallel zu den unteren Längsholmen 52 des Tragegestells angeordnet ist, und mehreren kurzen Querholmen 57 bestehen, die die Längsholme 52 und 56 miteinander verbinden. Des Weiteren sind zwischen dem oberen Längsholm 51 und den unteren Längsholmen 52 des Tragegestells in regelmäßigen Abständen Holme 58 angeordnet, die die Anlageschultern bilden. Die Holme 58 sind an beiden Seiten des Glastransportgestells 50 ausgebildet, so dass sich im Querschnitt betrachtet ein A-förmiger Aufbau des Glastransportgestells ergibt. Die Glasscheiben (hier nicht dargestellt) können also auf beiden Seiten des Glastransportgestells auf die Trägerböden 55 aufgestellt und gegen die von den Holmen 58 gebildete Anlageschulter gelehnt werden. Die Holme werden häufig von Metallrohren, insbesondere Vierkantrohren, gebildet, die miteinander zu einem Glastransportgestell verschweißt werden.

Durch die oben beschriebene Ausbildung der bekannten Glastransportgestelle ergibt sich insgesamt ein relativ sperriger Aufbau. So weist beispielsweise ein bekannter Standardtyp eines Glastransportgestells eine Breite von ca. 1 m, eine Länge von ca. 2,20 m und eine Höhe von ca. 2 m auf. Von solchen Standard-Glastransportgestellen können zur selben Zeit auf durchschnittlich großen LKWs aufgrund des sperrigen Aufbaus nur ca. 8 Stück transportiert werden. Ferner müssen beim Glaslieferanten bzw. beim Glashersteller sowie auch auf der Baustelle relativ große Lagerflächen für die Glastransportgestelle zur Verfügung gestellt werden. **Aufgabe** der Erfindung ist es entsprechend, ein Glastransportgestell gemäß dem Oberbegriff des Anspruchs 1 anzugeben, das kompakt aufgebaut ist, eine effiziente Lagerung der Gestelle erlaubt und trotzdem eine ausreichende Anzahl von Glasscheiben aufnehmen kann.

Die Lösung dieser Aufgabe gelingt mit dem Glastransportgestell gemäß Anspruch 1. Bevorzugte Weiterbildungen sind in den Unteransprüchen beschrieben.

Die Erfindung betrifft also ein Glastransportgestell gemäß dem Oberbegriff des Anspruchs 1, bei dem der mindestens eine Trägerboden an einer ersten, in Längsrichtung des Glastransportgestells verlaufenden, horizontalen Schwenkachse schwenkbar am Tragegestell gelagert ist und von einer aufgeklappten Position in eine zugeklappte Position in Richtung auf das Tragegestell hochklappbar ist. Weiterhin ist die mindestens eine Anlageschulter an einer zweiten, in Längsrichtung des Glastransportgestells verlaufenden, horizontalen Schwenkachse schwenkbar an dem mindestens einen Trägerboden gelagert, wobei die zweite Schwenkachse in der aufgeklappten Position seitlich neben der ersten Schwenkachse angeordnet und in der hochgeklappten Position die zweite Schwenkachse relativ gegenüber der ersten Schwenkachse nach oben verschoben ist. Schließlich ist die mindestens eine Anlageschulter höhenverschieblich am Tragegestell gelagert.

Der Grundgedanke der Erfindung besteht demnach darin, das Glastransportgestell nicht als festen Rahmen, sondern klappbar auszubilden. In der aufgeklappten Position nimmt das Glastransportgestell Glasscheiben in bekannter Weise auf, das heißt, die Glasscheiben werden mit einer Kante auf den Trägerboden aufgestellt und gegen die Anlageschulter gelehnt. Nachdem die Glasscheiben vom Glastransportgestell abgeladen worden sind, kann das Glastransportgestell in eine zugeklappte Position geklappt werden. In der zugeklappten Position nimmt es deutlich weniger Platz in Anspruch, so dass beispielsweise beim Rücktransport der leeren Gestelle von der Baustelle zum Glaslieferanten sehr viel mehr Gestelle auf einen LKW geladen werden können als bei den bekannten Gestellen. Ferner sind die unbeladenen Gestelle auch beim Glaslieferanten bzw. Glashersteller oder auch auf der Baustelle platzsparender lagerbar. Insgesamt können dadurch also Transport- bzw. Frachtkosten sowie Lagerkosten reduziert werden. Ferner können durch das erfindungsgemäße Glastransportgestell Ladevorgänge bei einem Lieferanten oder auf der Baustelle effizienter durchgeführt werden, da nach dem Entladen eines Glastransportgestells dieses zusammengeklappt und an die Seite gestellt werden kann, so dass es beim Entladen weiterer Glastransportgestelle nicht im Wege steht. Dies ist insbesondere häufig auf Großbaustellen ein Problem.

Die Klappbarkeit des Glastransportgestells wird dadurch erreicht, dass der mindestens eine Trägerboden schwenkbar am Tragegestell gelagert ist. Die schwenkbare Lagerung erfolgt an einer horizontal ausgerichteten Schwenkachse, die beispielsweise als Metallstab oder -stange ausgebildet sein kann und um die der Trägerboden schwenkbar ist. Die Schwenkachse verläuft in Längsrichtung des Tragegestells, so dass der Trägerboden gleichmäßig um die Schwenkachse in Richtung auf das Tragegestell hochklappbar ist. Die Schwenkachse ist am inneren, dem Tragegestell zugewandten Randbereich des Trägerbodens vorgesehen, so dass der gesamte Trägerboden um die Schwenkachse herumschwenken kann. Zweckmäßigerweise ist der Trägerbodens an einem unteren Bereich des Tragegestells gelagert, so dass eine optimale Ausnutzung des Lager- bzw. Abstellraums für die Glasscheiben gegeben ist. Wie weit der Trägerboden um die Schwenkachse schwenkbar ist, hängt von der jeweiligen Ausführungsform ab und bestimmt den Grad der Verkleinerung, der sich durch das Zuklappen des Glastransportgestells einstellt. Bevorzugt beträgt der maximale Schwenkwinkel des Trägerbodens 60 ° bis 90 °, besonders bevorzugt 75 ° bis 85 °.

Zusätzlich zur schwenkbaren Lagerung des Trägerbodens ist die Anlageschulter ebenfalls schwenkbar gelagert. Auch die schwenkbare Lagerung der Anlageschulter erfolgt über eine Schwenkachse, wobei diese zweite Schwenkachse die Anlageschulter mit dem Trägerboden schwenkbar verbindet. Für beide Schwenkverbindungen sind grundsätzlich alle aus dem Stand der Technik bekannten schwenkbaren Lagerungen, beispielsweise Bolzenverbindungen, verwendbar. Bevorzugt sind die Schwenkachsen als Metallstäbe oder -stangen ausgebildet.

In der aufgeklappten Position des Glastransportgestells ist die zweite Schwenkachse so angeordnet, dass sie sich seitlich neben der ersten Schwenkachse befindet. Das heißt, sie ist vom Tragegestell aus gesehen, an dem der Trägerboden an seinem inneren Randbereich gelagert ist, weiter außen angeordnet als die erste Schwenkachse, bzw. die Entfernung vom äußeren Randbereich des Trägerbodens zur zweiten Schwenkachse ist geringer als zur ersten Schwenkachse. Diese schwenkbare Lagerung der Anlageschulter ist an ihrem unteren End- bzw. Fußbereich angeordnet. Im gegenüberliegenden, oberen Kopfbereich ist die Anlageschulter darüber hinaus höhenverschieblich am Tragegestell gelagert.

Wird nun der Trägerboden von einer Bedienperson von einer aufgeklappten in eine zugeklappte Position in Richtung auf das Tragegestell hochgeklappt, wird gleichzeitig auch, aufgrund der speziellen Ausbildung des erfindungsgemäßen Glastransportgestells, die Anlageschulter um die zweite Schwenkachse verschwenkt. Da die zweite Schwenkachse weiter außen am Trägerboden angeordnet ist als die erste Schwenkachse, wird durch das Verschwenken des Trägerbodens nach oben in Richtung auf das Tragegestell hin die Position der zweiten Schwenkachse relativ gegenüber der ersten Schwenkachse nach oben verschoben. Gleichzeitig bewegt sich dadurch der untere Bereich der Anlageschulter auf das Tragegestell zu. Die Verschwenkung der zweiten Schwenkachse wird dadurch ermöglicht, dass die Anlageschulter an ihrem der zweiten Schwenkachse gegenüberliegenden Kopfbereich nicht starr, sondern höhenverschieblich am Tragegestell gelagert ist. Infolgedessen verschiebt sich der Kopfbereich der Anlageschulter durch das Hochklappen des Trägerbodens in eine zugeklappte Position ebenso wie die zweite Schwenkachse nach oben. Bei einer starren Lagerung des Kopfbereichs der Anlageschulter am Tragegestell wäre hingegen ein Verschwenken des Trägerbodens und der Anlageschulter nicht möglich, da die durch die Schwenkbewegung des Trägerbodens hervorgerufene Bewegung der Anlageschulter von der starren Lagerung blockiert werden würde.

Bei dem erfindungsgemäßen Glastransportgestell ist also für eine Bedienperson nur eine Verschwenkung, nämlich die Verschwenkung des Trägerbodens in Richtung auf das Tragegestell, notwendig, um das gesamte Gestell zu verschwenken und in eine zugeklappte Position zu bringen. Trägerboden und Anlageschulter werden also beide durch nur eine Schwenkbewegung verschwenkt, beim Zuklappen ebenso wie beim Aufklappen. Dadurch ist eine einfache und effiziente Bedienung des Glastransportgestells möglich. Grundsätzlich ist es ebenso möglich, dass eine Bedienperson die Anlageschulter von einer aufgeklappten Position in Richtung auf das Tragegestell hin bewegt und dadurch den Trägerboden mit verschwenkt. Bevorzugt wird die Bedienperson die Verschwenkung allerdings durch Hochklappen des Trägerbodens durchführen, da hierbei, aufgrund der Abmaße und Anordnung des Trägerbodens und der Anlageschulter, für die Verschwenkung geringere Kräfte aufgewandt werden müssen. Die höhenverschiebliche Lagerung der Anlageschulter am Tragegestell ist so auszubilden, dass der Verschiebeweg der Anlageschulter ausreichend ist für eine komplette Verschwenkung des Trägerbodens über den gesamten maximalen Schwenkwinkel. Zweckmäßigerweise ist die Anlageschulter zusätzlich zur Höhenverschieblichkeit auch schwenkbar in ihrem Kopfbereich am Tragegestell gelagert.

Zweckmäßigerweise ist das Tragegestell, wie auch bei bekannten Glastransportgestellen, im Wesentlichen senkrecht ausgerichtet. In solch einem Fall ist es bevorzugt, das Glastransportgestell so auszubilden, dass der Trägerboden und die Anlageschulter in der zugeklappten Position ebenfalls im Wesentlichen senkrecht ausgerichtet sind und im Wesentlichen am Tragegestell anliegen. Durch diese Anordnung lässt sich eine besonders platzsparende Ausbildungsform erreichen. Werden beispielsweise zur Ausbildung des Tragegestells, des Trägerbodens und der Anlageschulter 40 mm-Vierkantrohre verwendet, ergibt sich für ein Glastransportgestell mit einem Trägerboden und einer Anlageschulter beispielsweise eine Standbreite von 500 mm in der aufgeklappten Position. Wird das Glastransportgestell nun zugeklappt und liegen der Trägerboden und die Anlageschulter im Wesentlichen am Trägerrahmen an, reduziert sich die Standbreite auf ca. 80 mm. Man erhält also eine Reduzierung der Standbreite von mehr als 80 %. In der zugeklappten Position sind bei dieser Ausführungsform die erste und die zweite Schwenkachse in vertikaler Richtung direkt übereinander angeordnet.

Bevorzugterweise ist das Glastransportgestell in der Weise ausgebildet, dass es in der aufgeklappten Position, in der es mit Glasscheiben beladen werden kann, die bekannte A-Form aufweist. Entsprechend sind bei dieser Ausführungsform zwei Trägerböden und zwei Anlageschultern vorgesehen, die jeweils symmetrisch zueinander angeordnet sind. Die Symmetrieachse wird in der Querschnittsansicht zweckmäßigerweise von dem Tragegestell gebildet.

Zweckmäßigerweise ist zur Lagerung der Anlageschulter am Tragegestell ein Loslager vorgesehen, das eine Verschiebung des Kopfbereichs der Anlageschulter in der Höhe erlaubt. Ferner sollte es so ausgebildet sein, dass es eine Verschwenkung der Anlageschulter bei gleichzeitiger Höhenverschiebung zulässt. Bevorzugterweise umfasst das Loslager hierfür ein Langloch, in das ein Zapfen oder Ähnliches eingreift, der in Längsrichtung des Loches verschoben und gleichzeitig verdreht werden kann. Hierdurch lässt sich auf einfache und kostengünstige Weise ein effektives Loslager mit den erforderlichen Freiheitsgraden zur Verfügung stellen.

Der Trägerboden kann grundsätzlich in jeder geeigneten Weise hergesellt sein, solange er eine Träger- oder Auflagefläche für die Glasscheiben bildet. So kann der Boden beispielsweise aus einer durchgehenden Platte bestehen, auf der die Glasscheiben in der aufgeklappten Position aufsitzen. Bevorzugt wird der Trägerboden aber von mehreren parallelen Querholmen und mindestens einem Längsholm gebildet. Die parallelen Querholme sind dabei quer zum Glastransportgestell und der Längsholm in Richtung der Längsrichtung des Glastransportgestells ausgerichtet. Der Längsholm ist zweckmäßigerweise an der Unterseite der Querholme angeordnet und mit diesen, beispielsweise durch Schweißen, verbunden. Der Längsholm dient zur Stabilisierung und Lagefixierung der Querholme, und die Querholme bilden wiederum eine Auflage- bzw. Trägerfläche für die Glasscheiben. Somit ist der Trägerboden als eine steife, stabile Konstruktion einstückig ausgebildet und kann insgesamt als eine Einheit um die erste Schwenkachse verschwenkt werden.

Das Tragegestell kann grundsätzlich jede Form aufweisen, die dazu geeignet ist, den mindestens einen Trägerboden und die mindestens eine Anlageschulter stabil und in der Weise zu lagern, dass eine ungestörte Verschwenkung und eine sichere Lagerung der Glasscheiben sichergestellt sind. Zweckmäßigerweise weist das Tragegestell hierzu einen oberen Längsholm auf. An diesem Längsholm ist die mindestens eine Anlageschulter mit ihrem Kopfbereich höhenverschieblich gelagert. Bevorzugterweise ist das Tragegestell als in sich geschlossener, steifer Rahmen ausgebildet, in den der obere Längsholm integriert ist und der zusätzlich einen unteren Längsholm und zwei Querholme umfasst, die besonders bevorzugt jeweils an der Außenseite der Längsholme angebracht sind, so dass sich eine im Wesentlichen rechteckige Form ergibt. Die Holme sind fest miteinander, beispielsweise durch Verschweißung, verbunden. Der untere Längsholm ist zweckmäßigerweise etwas oberhalb der unteren Enden der Querholme anzuordnen und dient zur Aufnahme der ersten Schwenkachse und des Trägerbodens. Die erste Schwenkachse ist dabei zweckmäßigerweise an einer Seite des unteren Längsholms angeordnet. Um eine Schwenkbarkeit des Kopfbereichs der Anlageschulter zu gewährleisten, ist es zweckmäßig, eine weitere, dritte Schwenkachse an einer Seite des oberen Längsholm vorzusehen, die in die höhenverschiebliche Lagerung integriert ausgebildet ist.

Die mindestens eine Anlageschulter kann ebenso wie der mindestens eine Trägerboden jede geeignete Form aufweisen (beispielsweise kann sie als Platte ausgebildet sein), solange sie eine Anlagefläche für die Glasscheiben bietet. Bevorzugterweise umfasst die mindestens eine Anlageschulter mehrere parallele Holme, die jeweils an ihrem Fußbereich am Trägerboden und an ihrem Kopfbereich am Tragegestell gelagert sind. Dadurch ergibt sich auf einfach herzustellende Weise eine optimale Anlagefläche für die Glasscheiben, wobei jeweils darauf zu achten ist, dass jeder einzelne Holm schwenkbar am Trägerboden und höhenverschieblich am Tragegestell gelagert ist. Besonders bevorzugt ist im Kopfbereich jedes Holms ein Loslager, insbesondere ein Loslager mit einem Langloch, angeordnet. In die Langlöcher können beispielsweise am Tragegestell angeordnete Zapfen oder eine am Tragegestell angeordnete Stange eingreifen, so dass die Höhenverschieblichkeit und gleichzeitig die Schwenkbarkeit der Anlageschulter gewährleistet ist.

Um ein ungewolltes Auf- und Zuklappen des Glastransportgestells zu verhindern, ist es zweckmäßig, eine Arretiereinrichtung zum lösbaren Arretieren des mindestens einen Trägerbodens vorzusehen. Hierbei arretiert die Arretiereinrichtung den mindestens einen Trägerboden zumindest in der aufgeklappten Position. Grundsätzlich ist auch eine zweite Arretiereinrichtung vorsehbar, die den Trägerboden ebenfalls in der zugeklappten Position arretiert. Ferner können diese Funktionalitäten in einer Arretiereinrichtung kombiniert werden. Da der Trägerboden mit der Anlageschulter in der Weise verbunden ist, dass die Schwenkbewegung des Trägerbodens an die Anlageschulter übertragen wird und umgekehrt, ist es entsprechend auch möglich, die Arretiereinrichtung so auszubilden, dass sie die Anlageschulter arretiert, wodurch dann der Trägerboden ebenfalls in einer Position fixiert ist.

In einer bevorzugten Ausführungsform umfasst die Arretiereinrichtung einen am oberen Längsholm des Tragegestells angeordneten Sperrschieber. Der Sperrschieber ist so ausgebildet, dass er entlang des oberen Längsholms in Längsrichtung zwischen einer Arretier- und einer Freigabeposition verschiebbar ist. Ferner weist der Sperrschieber Ausnehmungen auf, die mit den Kopfbereichen der Holme der mindestens einen Anlageschulter komplementär ausgebildet sind. Das heißt, in der Freigabeposition ist jeweils eine Ausnehmung einem Kopfbereich eines Holms zugeordnet und in der Weise relativ zu den Holmen der Anlageschulter ausrichtet, dass die Holme in Vertikalrichtung durch die Ausnehmung hindurch verschoben werden können (wenn das Glastransportgestell von einer aufgeklappten in eine zugeklappte Position verschwenkt wird). In der Arretierposition sind die Sperrschieber in der Weise über die Kopfbereiche der Holme hinweggeschoben, dass diese am Sperrschieber anliegen und die Höhenverschieblichkeit der Anlageschulter von dem Sperrschieber blockiert wird. Besonders bevorzugt ist am Sperrschieber ein Betätigungselement, insbesondere ein Hebel, vorgesehen, durch den der Sperrschieber leicht und komfortabel betätigbar ist. Durch eine derartig ausgebildete Arretiereinrichtung kann auf einfache Weise eine sichere Arretierung vorgenommen werden, ohne dass zusätzliche Bauteile oder über die Betätigung des Betätigungselements hinausgehende Handgriffe vonnöten wären. Besonders bevorzugt ist bei dieser Ausführungsform ein weiteres Arretiermittel zum Arretieren des Trägerbodens in der zugeklappten Position vorhanden, so dass dieser nicht ungewollt, beispielsweise beim Transport auf einem LKW, aufklappen kann. Hierfür können alle aus dem Stand der Technik bekannten geeigneten Arretiermittel verwendet werden. Insbesondere kann als Arretiermittel ein Arretierstift verwendet werden.

Bei den bekannten Glastransportgestellen ist an der Unterseite der Trägerböden jeweils mindestens ein Gestellfuß vorhanden, auf dem das Glastransportgestell auf dem Boden aufsitzt. In einer weiteren bevorzugten Ausführungsform der Erfindung ist ein solcher Gestellfuß am Trägerboden lösbar angebracht oder klapp- oder verschiebbar befestigt. Dies ist sinnvoll, da dadurch in der zugeklappten Position der nach außen vorstehende Gestellfuß weggeklappt bzw. vom Trägerboden abgenommen werden kann und infolgedessen die Standbreite des Glastransportgestells weiter verringert wird und mehr Glastransportgestelle auf einer vorgegebenen Fläche gelagert werden können.

In einer weiteren bevorzugten Ausführungsform umfassen die erste und die zweite und gegebenenfalls auch die dritte Schwenkachse jeweils eine über die gesamte Länge des Glastranportgestells verlaufende Stange, die durch komplementäre Löcher in dem mindestens einen Trägerboden, dem Tragegestell oder der mindestens einen Anlageschulter verläuft. In ihren Endbereichen ist die Stange gegen Herausrutschen aus den Löchern gesichert. Die Sicherung der Stange kann durch alle aus dem Stand der Technik bekannten, dafür geeigneten Mittel, beispielsweise durch Bolzen oder Ähnliches, erfolgen. Hierdurch kann auf einfache und kostengünstige Weise ein effizientes und sicheres Verschwenken der einzelnen Teile des Glastransportgestells gewährleistet werden. Sind der mindestens eine Trägerboden und die mindestens eine Anlageschulter durch Holme gebildet, sind zweckmäßigerweise in jedem Holm Löcher vorzusehen, in die die Stange eingreifen kann.

Nachfolgend wird die Erfindung anhand in der Zeichnung dargestellter Ausführungsbeispiele weiter beschrieben. Es zeigen schematisch:
- Fig. 1: eine Seitenansicht eines A-förmig ausgebildeten Transportgestells in einer aufgeklappten Position;
- Fig. 2a: eine Seitenansicht eines einseitig ausgebildeten Glastransportgestells in einer aufgeklappten Position;
- Fig. 2b: das Glastransportgestell aus Figur 2a in einer zugeklappten Position;
- Fig. 2c: eine um 90° gedrehte Seitenansicht des Glastransportgestells aus Figur 2b;
- Fig. 3: eine perspektivische Ansicht eines einseitig ausgebildeten Glastransportgestells in einer aufgeklappten Position;
- Fig. 4: eine perspektivische Draufsicht auf ein einseitiges Glastransportgestell mit Sperrschieber in der Freigabeposition;
- Fig. 5: die Darstellung aus Figur 4 mit dem Sperrschieber in einer Arretierposition und
- Fig. 6: ein Glastransportgestell des Standes der Technik.

Bei den in den Figuren dargestellten verschiedenen Ausführungsformen der vorliegenden Erfindung sind gleiche Bestandteile mit gleichen Bezugszeichen versehen.

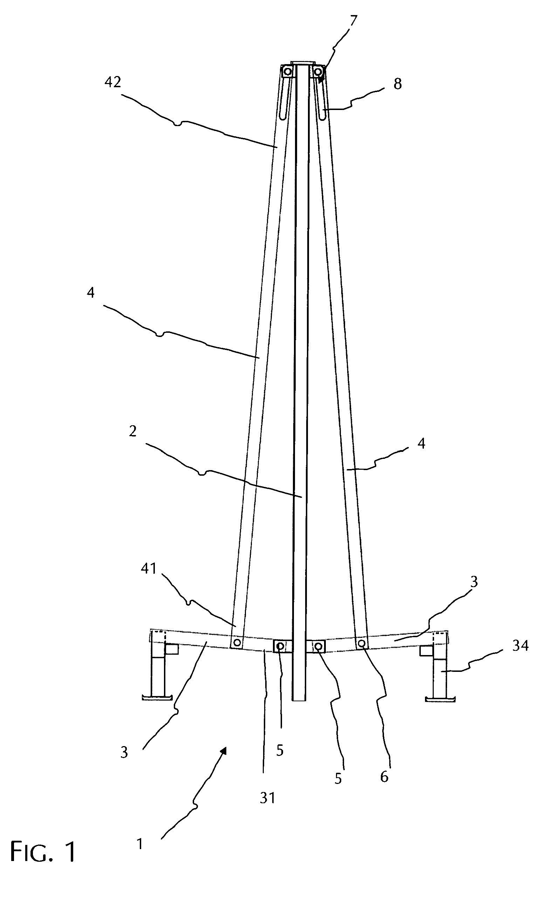

Figur 1 zeigt eine Seitenansicht eines aufgeklappten, A-förmigen Glastransportgestells 1. Glastransportgestell 1 weist ein mittiges, senkrecht ausgerichtetes Tragegestell 2 auf, das über die gesamte Länge und Höhe des Glastransportgestells 1 verläuft. In einem unteren Bereich des Tragegestells 2 ist zu jeder Seite des Tragegestells 2 jeweils ein Trägerboden 3 angeordnet. An ihren inneren Randbereichen 31 sind die Trägerböden 3 jeweils an einer ersten Schwenkachse 5 gelagert, die seitlich am Tragegestell 2 vorgesehen ist. Im dargestellten Beispiel besteht die Schwenkachse 5 aus einer durchgehenden Metallstange, die über die gesamte Länge des Glastransportgestells 1 verläuft. An ihren äußeren Endbereichen weisen die Trägerböden 3 jeweils einen nach unten vorstehenden Gestellfuß 34 auf, so dass das Glastransportgestell 1 auf den beiden Gestellfüßen 34 und dem unteren Ende des Tragegestells 2 auf dem Untergrund aufsitzt und einen stabilen Stand hat. Die Gestellfüße 34 sind derart ausgebildet, dass sie vom Trägerboden 3 abnehmbar sind. Eine solche lösbare Verbindung kann beispielsweise mittels eines Sicherungsstiftes gesichert werden, so dass ein unerwünschtes Herausrutschen der Gestellfüße 34 vermieden wird. Seitlich neben der ersten Schwenkachse 5 ist an den Trägerböden 3 jeweils eine weitere, zweite Schwenkachse 6 vorgesehen, an der jeweils ein Fußbereich 41 einer Anlageschulter 4 schwenkbar gelagert ist. Die Schwenkachse 6 ist in etwa bei einem Drittel des Weges vom inneren Randbereich 31 des Trägerbodens 3 bis zu dessen äußeren Ende angeordnet. Die Anlageschultern 4 sind wiederum an ihrem oberen Kopfbereich 42 höhenverschieblich am Tragegestell 2 gelagert und schließen in der aufgeklappten Position mit Bezug auf ihre Höhe in etwa bündig mit dem Tragegestell 2 ab. Zur höhenverschieblichen Lagerung der Anlageschultern 4 sind jeweils Loslager 8 vorgesehen, die ein Langloch 7 umfassen, das im Kopfbereich 42 der Anlageschultern 4 ausgebildet ist. Das Glastransportgestell 1 ist insgesamt symmetrisch ausgebildet, wobei das Tragegestell 2 die Symmetrieebene bildet.

Das in der Fig. 2a dargestellte Glastransportgestell 1 befindet sich ebenfalls in der aufgeklappten Position. Im Gegensatz zu dem Glastransportgestell aus Fig. 1 ist dieses Glastransportgestell 1 einseitig ausgebildet, das heißt, es sind nur auf einer Seite des Tragegestells 2 ein Trägerboden 3 sowie eine Anlageschulter 4 vorgesehen.

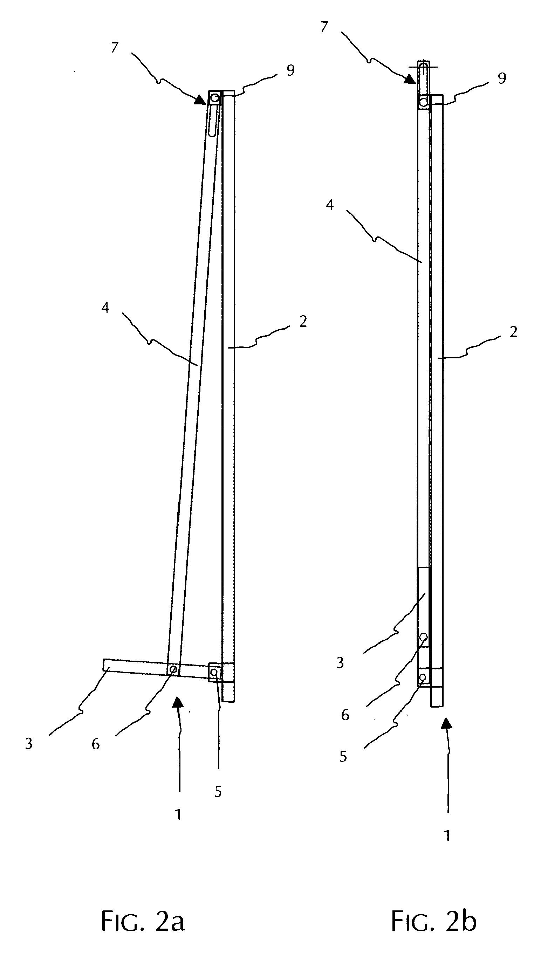

Fig. 2b zeigt dasselbe Glastransportgestell 1, wobei es sich, im Unterschied zur Darstellung aus der Fig. 2a, in einer zugeklappten Position befindet. Der Trägerboden 3 ist um die erste Schwenkachse 5 nach oben hin auf das Tragegestell 2 hochgeklappt und ist daran anliegend und parallel dazu ausgerichtet. Ebenso liegt die Anlageschulter 4 am Tragegestell 2 an und ist parallel dazu ausgerichtet. Ferner ist die Anlageschulter 4 in ihrer Höhe gegenüber der Darstellung aus Fig. 2a nach oben verschoben und hat sich um die dritte Schwenkachse 9, die durch das Langloch 7 der Anlageschulter 4 hindurchgreift und am oberen Bereich des Tragegestells angeordnet ist, verschwenkt. Ebenso wie der obere Kopfbereich der Anlageschulter 4 ist auch die zweite Schwenkachse 6, insbesondere relativ gegenüber der ersten Schwenkachse 5, nach oben verschoben. Es ist erkennbar, dass die Standbreite des Glastransportgestells 1 in der zugeklappten Position um ein Vielfaches geringer ist als die Standbreite in der aufgeklappten Position (siehe Fig. 2a).

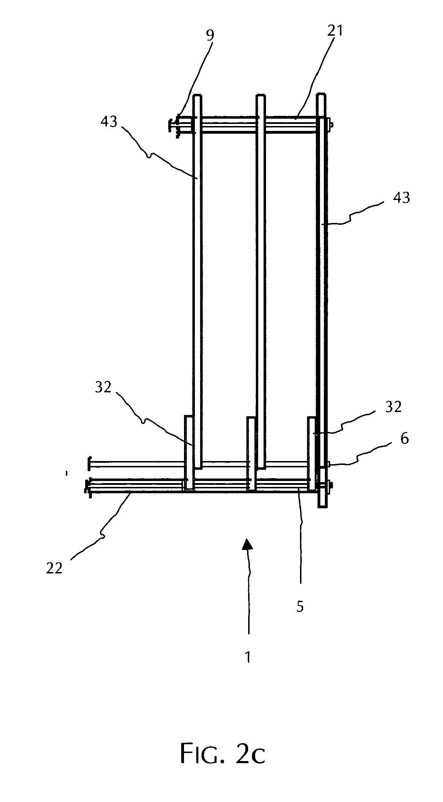

Fig. 2c zeigt die Darstellung aus der Fig. 2b in einer um ca. 90 ° gedrehten, teilweise geschnittenen Seitenansicht. Bei dieser Darstellung befindet sich das Glastransportgestell 1 also ebenfalls in der zugeklappten Position. Es ist erkennbar, dass die Anlageschulter 4 aus mehreren parallelen Holmen 43 und der Trägerboden 3 aus mehreren parallelen Querholmen 32 besteht. Das Tragegestell 2 besteht aus einem oberen Längsholm 21, einem unteren Längsholm 22 und zwei Querholmen (hier nicht dargestellt). Am oberen Längsholm ist die als durchgehender Stab ausgebildete dritte Schwenkachse 9 und am unteren Längsholm 22 ist die ebenfalls als durchgehender Stab ausgebildete erste Schwenkachse 5 angeordnet. Die Querholme 32 sind jeweils seitlich versetzt neben den Holmen 43 angeordnet.

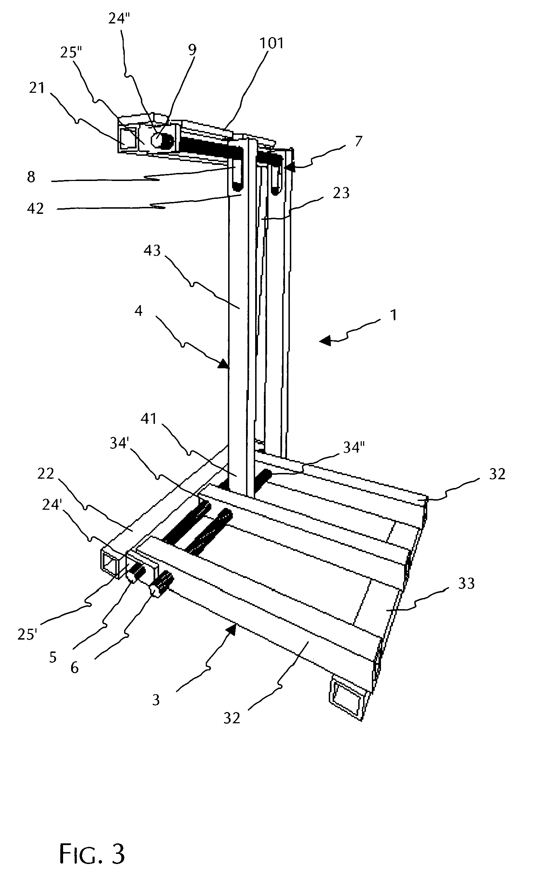

Fig. 3 zeigt die perspektivische Ansicht eines einseitigen Glastransportgestells 1. Das Tragegestell 2 umfasst einen oberen Längsholm 21, einen unteren Längsholm 22 und zwei Querholme 23, wobei aus Gründen der besseren Übersicht nur der hintere dargestellt ist. Ebenfalls sind von der drei Holme 43 umfassenden Anlageschulter 4 nur zwei der drei Holme dargestellt. Sämtliche Holme sind als Vierkantmetallrohre ausgebildet. Die drei Schwenkachsen 5, 6 und 9 sind als durchgehende Stäbe ausgebildet, die in am Glastransportgestell vorgesehene komplementäre Löcher eingreifen und über die gesamte Länge des Glastransportgestells 1 verlaufen. Die erste Schwenkachse 5 verläuft durch Löcher 24' des Tragegestells 2, die in vom Tragegestell 2 seitlich vorspringenden Laschen 25' vorgesehen sind. Ferner verläuft die Schwenkachse 5 jeweils durch ein Loch 34' in jedem Querholm 32. Die zweite Schwenkachse 6 verläuft durch weitere Löcher 34" in den Querholmen 32 und durch Löcher in den Holmen 43 (hier nicht dargestellt). Die obere, dritte Schwenkachse 9 verläuft durch Löcher 24", die in seitlich vom oberen Längsholm 21 vorspringenden Laschen 25" ausgebildet sind, und durch Langlöcher 8, die in den Kopfbereich 42 der Holme 43 vorgesehen sind. Oberhalb der Kopfbereiche 42 der Holme 43 ist ein auf dem oberen Längsholm 21 aufliegender Sperrschieber 101 vorgesehen.

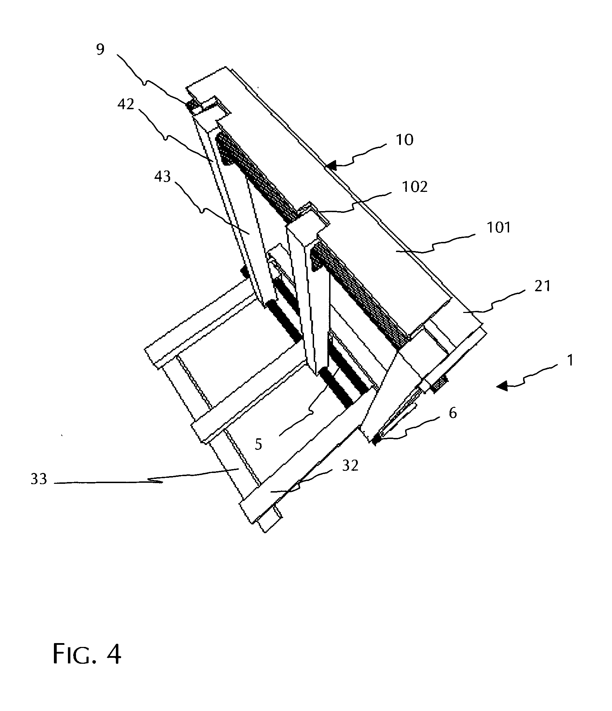

Fig. 4 zeigt eine perspektivische Draufsicht auf ein einseitig ausgebildetes Glastransportgestell 1, das im Wesentlichen gemäß der Ausführungsform aus Fig. 3 ausgebildet ist. Der auf dem oberen Längsholm 21 aufliegende Sperrschieber 101 weist Ausnehmungen 102 auf, die mit den Holmen 43 korrespondieren. Der Sperrschieber 101 aus Fig. 4 befindet sich in einer Freigabeposition, das heißt, die Ausnehmungen 102 sind in der Weise direkt über den Kopfbereichen 42 der Holme 43 positioniert, dass durch ein Hochklappen des Trägerbodens 3 in Richtung des Tragegestells 2 die Holme 43 durch die Ausnehmungen 102 nach oben hindurch verschoben werden können.

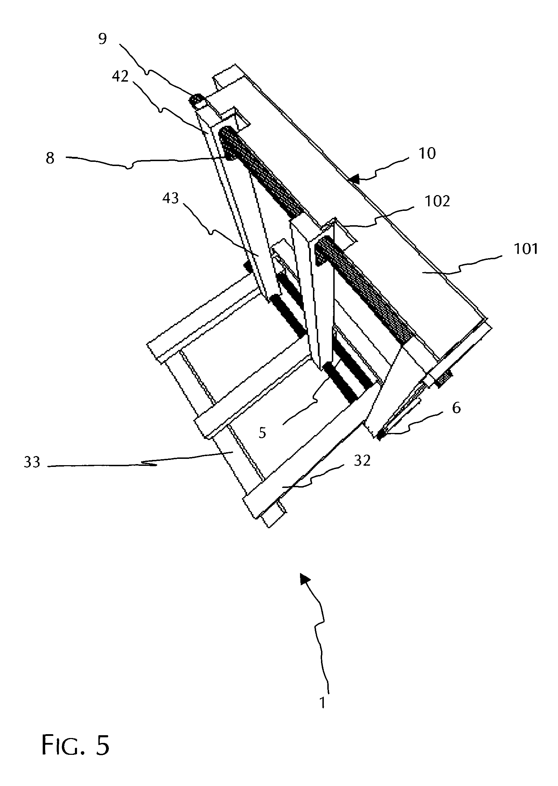

Fig. 5 zeigt die Darstellung aus Fig. 4, wobei sich der Sperrschieber 101 in einer Arretierposition befindet. Gegenüber der Darstellung aus Fig. 4 ist der Sperrschieber 101 nach rechts verschoben, wodurch der Sperrschieber an der Stirnfläche der Holme 43 anliegt und diese etwa zur Hälfte abdeckt. Dadurch wird ein Verschieben der Holme in vertikaler Richtung nach oben blockiert, so dass das Glastransportgestell insgesamt in der aufgeklappten Position arretiert ist. Hierdurch kann also verhindert werden, dass beispielsweise ein voll beladenes Glastransportgestell versehentlich zu einer zugeklappten Position hin verschwenkt wird, wodurch die auf dem Glastransportgestell befindlichen Glasscheiben beschädigt werden könnten.

## Patentansprüche

1. Glastransportgestell (1) zum Transport von Glasscheiben, insbesondere auf LKW-Ladeflächen, mit:
einem Tragegestell (2),
mindestens einem Trägerboden (3), der eine Trägerfläche für die Glasscheiben bildet und der an seinem dem Tragegestell (2) zugewandten, inneren Randbereich (31) an diesem gelagert ist, und
mindestens einer Anlageschulter (4), die eine Anlagefläche für die Glasscheiben bildet und die an ihrem Fußbereich (41) an dem Trägerboden (3) und an ihrem Kopfbereich (42) an dem Tragegestell (2) gelagert ist,
**dadurch gekennzeichnet,**
**dass** der mindestens eine Trägerboden (3) an einer ersten, in Längsrichtung des Glastransportgestells (1) verlaufenden, horizontalen Schwenkachse (5) schwenkbar am Tragegestell (2) gelagert ist und von einer aufgeklappten Position in eine zugeklappte Position in Richtung auf das Tragegestell (2) hochklappbar ist,
**dass** die mindestens eine Anlageschulter (4) an einer zweiten, in Längsrichtung des Glastransportgestells (1) verlaufenden, horizontalen Schwenkachse (6) schwenkbar an dem mindestens einen Trägerboden (3) gelagert ist, wobei die zweite Schwenkachse (6) in der aufgeklappten Position seitlich neben der ersten Schwenkachse (5) angeordnet ist und in der hochgeklappten Position die zweite Schwenkachse (6) relativ gegenüber der ersten Schwenkachse (5) nach oben verschoben ist, und
**dass** die mindestens eine Anlageschulter (4) höhenverschieblich am Tragegestell (2) gelagert ist.

2. Glastransportgestell gemäß Anspruch 1,
**dadurch gekennzeichnet,**
**dass** zwei Trägerböden (3) und zwei Anlageschultern (4) vorgesehen sind, die jeweils symmetrisch zueinander angeordnet sind.

3. Glastransportgestell gemäß Anspruch 1 oder 2,
**dadurch gekennzeichnet,**
**dass** mindestens ein Loslager (7), insbesondere ein Loslager mit einem Langloch (8), zur höhenverschieblichen Lagerung der mindestens einen Anlageschulter (4) vorgesehen ist.

4. Glastransportgestell gemäß einem der vorhergehenden Ansprüche,
**dadurch gekennzeichnet,**
**dass** der mindestens eine Trägerboden (3) mehrere parallele Querholme (32) und mindestens einen Längsholm (33) umfasst.

5. Glastransportgestell gemäß einem der vorhergehenden Ansprüche,
**dadurch gekennzeichnet,**
**dass** das Tragegestell (2) einen oberen Längsholm (21) aufweist und insbesondere als Rahmen ausgebildet ist, der einen oberen Längsholm (21), einen unteren Längsholm (22) und zwei Querholme (23) umfasst.

6. Glastransportgestell gemäß Anspruch 5,
**dadurch gekennzeichnet,**
**dass** die erste Schwenkachse (5) an einer Seite des unteren Längsholms (22) und eine dritte, zur höhenverschieblichen Lagerung der mindestens einen Anlageschulter (4) ausgebildete Schwenkachse (9) an einer Seite des oberen Längsholms (21) angeordnet sind.

7. Glastransportgestell gemäß einem der vorhergehenden Ansprüche,
**dadurch gekennzeichnet,**
**dass** die mindestens eine Anlageschulter (4) mehrere parallele Holme (43) umfasst, die jeweils am mindestens einen Trägerboden (3) und am Tragegestell (2) gelagert sind.

8. Glastransportgestell gemäß Anspruch 7,
**dadurch gekennzeichnet,**
**dass** im Kopfbereich (42) jedes Holms (43) der mindestens einen Anlageschulter (4) ein Loslager (7), insbesondere ein Loslager (7) mit einem Langloch (8), angeordnet ist.

9. Glastransportgestell gemäß einem der vorhergehenden Ansprüche,
**dadurch gekennzeichnet,**
**dass** eine Arretiereinrichtung (10) zum lösbaren Arretieren des mindestens einen Trägerbodens (3) vorgesehen ist, wobei die Arretiereinrichtung (10) den mindestens einen Trägerboden (3) zumindest in der aufgeklappten Position arretiert.

10. Glastransportgestell gemäß Anspruch 9, soweit rückbezogen auf Ansprüche 5 und 7,
**dadurch gekennzeichnet,**
**dass** die Arretiereinrichtung (10) einen am oberen Längsholm (21) des Tragegestells (2) angeordneten Sperrschieber (101) umfasst, der auf dem und entlang des oberen Längsholms (21) zwischen einer Arretier- und einer Freigabeposition verschiebbar ist und in dem zu den Kopfbereichen (42) der Holme (43) der mindestens einen Anlageschulter (4) komplementäre Ausnehmungen (102) vorgesehen sind, wobei der Sperrschieber (101) in der Arretierposition an den Kopfbereichen (42) der Holme (43) der mindestens einen Anlageschulter (4) anliegt und in der Freigabeposition die Ausnehmungen (102) korrespondierend mit den Kopfbereichen (42) der Holme (43) der mindestens einen Anlageschulter (4) angeordnet sind.

11. Glastransportgestell gemäß Anspruch 10,
**dadurch gekennzeichnet,**
**dass** ein Betätigungselement, insbesondere ein Hebel, zur Betätigung des Sperrschiebers (101) vorgesehen ist.

12. Glastransportgestell gemäß einem der vorhergehenden Ansprüche,
**dadurch gekennzeichnet,**
**dass** am mindestens einen Trägerboden (3) mindestens ein Gestellfuß (34) vorhanden ist, der lösbar mit dem Trägerboden (3) verbunden ist oder klapp- oder verschiebbar am Trägerboden (3) befestigt ist.

13. Glastransportgestell gemäß einem der vorhergehenden Ansprüche,
**dadurch gekennzeichnet,**
**dass** die erste und die zweite Schwenkachse (5, 6) jeweils eine über die gesamte Länge des Glastransportgestells (1) verlaufende Stange umfassen, die durch komplementäre Löcher (35, 24, 8) im mindestens einen Trägerboden (3) und dem Tragegestell (2) bzw. im mindestens einen Trägerboden (3) und der mindestens einen Anlageschulter (4) verläuft und an ihren Endbereichen gegen Herausrutschen aus den Löchern (35, 24, 8) gesichert ist.
